# FASCICULE DE BREVET EUROPEEN

(11) **EP 0 609 174 B1**
(45) Date de publication et mention de la délivrance du brevet: **04.09.1996**
(21) Numéro de dépôt: 94810022.7
(22) Date de dépôt: 14.01.1994
(51) Int. Cl.: B27F 5/12, B23C 3/30, B27C 5/10, E06B 7/23

(54) **Machine à fraiser des rainures**
Vorrichtung zum Fräsen von Nuten
Apparatus for milling grooves

(30) Priorité: 28.01.1993 CH 243/93
(43) Date de publication de la demande: 03.08.1994
(73) Titulaire: HEBOR S.A., CH-1027 Lonay (CH)
(72) Inventeur: Bösch, Jakob, CH-9602 Bazenheid (CH)
(74) Mandataire: Meylan, Robert Maurice

(56) Documents cités:
- DE-A- 2 119 269
- DE-A- 2 527 996
- DE-C- 404 107
- FR-A- 1 208 969
- FR-A- 2 520 046
- US-A- 2 635 655
- US-A- 4 290 464
- US-A- 4 993 897

## Description

La présente invention a pour objet une machine pour le fraisage, dans les cadres de portes et de fenêtres, de rainures destinées à recevoir des garnitures d'étanchéité, comprenant un corps contenant un moteur entraînant une broche destinée à recevoir une fraise profilée, une bague dans laquelle est engagée par vissage l'extrémité dudit corps proche de la broche, un guide profilé en forme d'équerre fixé à ladite bague, ce guide étant orientable relativement audit corps autour d'un axe parallèle aux faces du guide et coplanaire à l'axe de la broche et formant un angle aigu avec cet axe, des moyens étant prévus pour fixer angulairement le guide dans la position désirée, et une poignée s'étendant au-dessus du guide pour le maintien du guide contre le cadre à fraiser.

Une telle machine est commercialisée par la déposante sous la marque HEBOR D-83. Elle permet de fraiser aisément une rainure à l'intérieur du dièdre formé par un encadrement de portes ou de fenêtres. Le guide peut être orienté autour d'un axe parallèle à son arête, de telle sorte que la rainure peut être fraisée selon une direction différente de la bissectrice du dièdre formé par l'encadrement. Le guide de cette machine est fixé, au moyen d'une vis, sur une face plane latérale de la bague par une partie plane en forme de secteur munie d'une rainure en arc de cercle coopérant avec une pièce de guidage en arc de cercle fixée à la bague. La vis sert également au blocage du guide dans la position angulaire désirée. La poignée est solidaire du guide et s'étend parallèlement au-dessus de celui-ci. L'extrémité du corps de la machine est munie d'un filetage multiple plat coopérant avec un filetage correspondant de la bague, ces filetages permettant de régler la profondeur de travail. Le blocage du corps en rotation, c'est-à-dire la fixation de la profondeur de travail, s'effectue au moyen d'une vis radiale agissant sur un plot en matière synthétique.

Des machines à main pour le fraisage des rainures profilées sont en outre connues des documents FR-A-2 520 046, US-A-4 993 897, DE-A-25 27 996 et DE-A-21 19 269.

Bien que permettant, par son principe, de fraiser plus aisément et plus rapidement les rainures, il s'est avéré que la machine HEBOR D-83 présente quelques défauts. Il a en effet été constaté à l'usage que la liaison entre le corps de la machine et le guide n'est pas suffisamment rigide pour empêcher toutes vibrations de la fraise relativement à son axe. Par ailleurs, lorsqu'on travaille avec le guide basculé d'un côté ou de l'autre de sa position médiane relativement au corps de la machine, la force exercée sur le guide au moyen de la poignée ne s'exerce plus dans l'axe de la fraise, ce qui a pour effet une certaine instabilité qui rend le fraisage moins aisé et moins précis. En outre, l'encombrement du secteur ne permet pas toujours de fraiser une rainure dans le cadre d'une fenêtre lorsque celle-ci ne peut pas être ouverte de plus de 90°. Enfin, le jeu, nécessaire à la fabrication, dans les filetages du corps et de la bague augmente avec le temps et, de plus, si l'utilisateur omet de resserrer la vis agissant sur le plot en matière synthétique, ce qui arrive fréquemment la machine travaille avec un jeu nuisible à la précision d'exécution de la rainure.

La présente invention vise à remédier à ces inconvénients.

La machine selon l'invention est caractérisée par le fait que la poignée est fixée rigidement à la bague, que le guide présente au moins deux faces en permanence en appui contre au moins deux faces homologues de la bague, faces distantes l'une de l'autre et contre lesquelles le guide est maintenu appliqué par un élément de pression, et que la bague dans laquelle est vissée l'extrémité du corps est fendue et munie de moyens de serrage de la fente, de manière à pouvoir être resserrée sur ladite extrémité.

La poignée étant fixée rigidement à la bague, son axe et l'axe de la broche sont toujours coplanaire et la force exercée par l'utilisation agit toujours dans le plan de l'axe de la broche. Cette position neutre assure une plus grande stabilité et une plus grande sûreté dans l'exécution de la rainure.

L'encombrement des moyens d'orientation du guide est sensiblement réduit, ce qui permet en toute circonstance de fraiser, même dans le cas d'une porte ou d'une fenêtre ne s'ouvrant pas plus de 90°.

D'autre part, le guide est fixé beaucoup plus rigidement à la bague et la machine constitue un ensemble beaucoup plus rigide assurant un travail plus sur et plus précis.

L'utilisation d'une bague fendue permet de supprimer le jeu dans le guidage du corps dans la bague et en outre de régler la dureté en rotation de la manière désirée.

Enfin, la distance entre la broche et l'axe autour duquel le guide est orientable est plus courte, ce qui a pour effet de réduire la vibration et les écarts latéraux dûs aux variations de charge.

Les faces en contact du guide et de la bague permettent bien entendu une orientation angulaire du guide sur la bague. Ces faces sont donc cylindriques ou conique. Il est possible d'avoir une combinaison de surfaces cylindriques et coniques.

Le dessin annexé représente, à titre d'exemple, une forme d'exécution de la machine selon l'invention.

La figure 1 est une vue partielle, de côté, de la machine avec une coupe partielle selon I-I.

La figure 2 est une vue partielle de la machine selon la direction II.

La figure 3 représente schématiquement deux positions usuelles de travail du guide.

Les figures 4 et 5 représentent un exemple de profil de rainure obtenu dans les deux positions de la figure 3.

Le dessin représente une exécution dans laquelle le guide s'appuye sur la bague par une combinaison de surfaces coniques et cylindrique.

La machine représentée comprend un corps 1 de forme approximativement cylindrique contenant un moteur électrique commandé par un interrupteur 2 entraînant une broche 3 dans laquelle est fixée une fraise 4 présentant le profil de la rainure à fraiser. Le corps 1 présente une extrémité cylindrique 5 de diamètre réduit autour de laquelle est enroulé et soudé un fil hélicoïdal 32 positionné dans une gorge 33. Cette partie 5 est vissée, par son fil 33, dans une large bague 6 munie d'une rainure hélicoîdale et fendue sur un côté par une fente 34 parallèle à l'axe 11. Cette fente 34 est traversée par une vis 35 munie d'un écrou 36. Par la rotation du corps 1, il est possible de faire avancer ou reculer la fraise relativement à la bague 6. Au moyen de la vis 34, il est possible de serrer plus ou moins la bague fendue 6 sur la partie 5 et de régler ainsi la dureté de la rotation du corps 1 dans la bague 6, c'est-à-dire d'empêcher le corps de tourner de manière intempestive. La bague fendue est en contact de façon uniforme sur toute la longueur du fil 32 et aucun jeu ne peut apparaître en cours d'utilisation. La vis 7, par sa tête, sert de butée à la partie 5. Elle limite la profondeur de travail de la fraise.

La bague 6 présente un prolongement radial 8 sur lequel sont fixés d'une part une poignée 9 et d'autre part un guide 10.

La poignée 9 est fixée rigidement à la bague 6 et s'étend dans une direction coplanaire avec l'axe 11 de la broche 3.

Le guide 10 se présente, comme dans l'art antérieur, sous la forme d'un dièdre à 90° d'arête 12. Le dièdre est fixé rigidement au moyen de vis sur une pièce massive 13 par laquelle le guide 10 est fixé au prolongement 8 de la bague 6. A cet effet, la pièce 13 présente deux parties saillantes 14 et 15 s'étendant transversalement au guide 10. La partie saillante 14 est limitée radialement par une surface cylindrique 16 dont l'axe 17 est situé à l'intérieur du dièdre formé par le guide 10 à une certaine distance de l'arête 12 de ce dièdre et coplanaire avec l'axe 11 de la broche. Cette surface cylindrique 16 s'étend sur 90° et elle est en appui contre une surface cylindrique 18 de même axe et de même rayon formé sur le prolongement 8 de la bague. La saillie 15 est limitée radialement par deux surfaces tronconiques 19 et 20 s'étendant également sur 90° et prenant appui sur deux surfaces tronconiques correspondantes formées sur la bague 6 et son prolongement. Toutes ces surfaces tronconiques ont pour axe l'axe 17. Entre les faces tronconiques 19 et 20 s'étend une face cylindrique 21 présentant des cannelures 22 dans lesquelles peut s'engager une bille 23 sous la poussée d'un ressort logé dans la bague 6 pour déterminer des positions angulaires particulières.

Entre les saillies 14 et 15 est formé une rainure 24 dont les parois latérales convergentes et tronconiques prennent appui sur les faces latérales tronconiques d'une pièce de serrage 25 vissée sur la tige filetée 26 d'une manette de serrage 27 montée sur la bague 6 et dont l'actionnement, en serrage, applique la face cylindrique et les faces coniques des saillies 14 et 15 contre les faces correspondantes de la bague 6. Le guide 10 peut ainsi être rigidement fixé à la bague 6.

On distingue en outre sur le dessin un orifice 28 prévu à l'arrière de la pièce 13 du guide 10. Cet orifice est destiné à la fixation de l'extrémité d'un tuyau d'aspirateur.

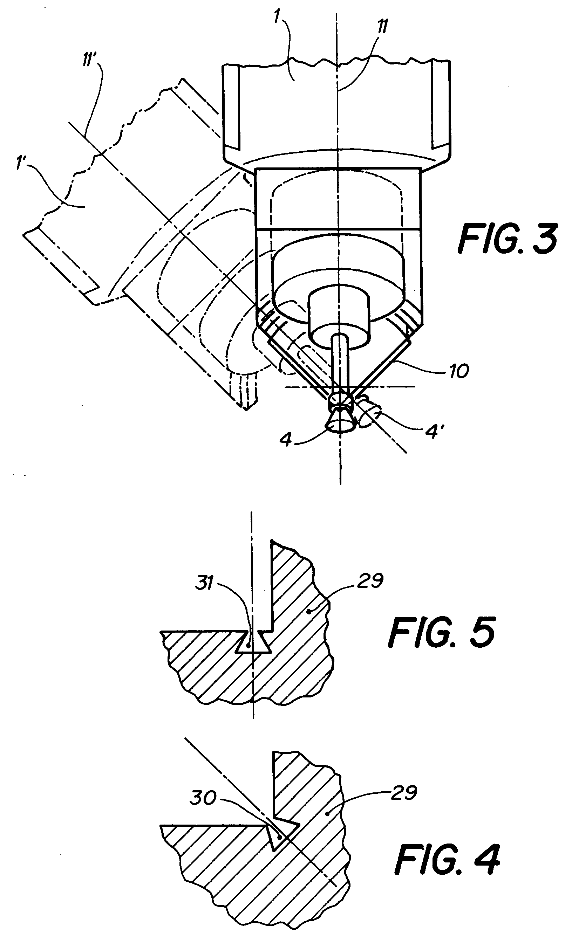

La figure 3 montre deux positions caractéristiques de travail que peut prendre le corps 1 de la machine relativement au guide 10.

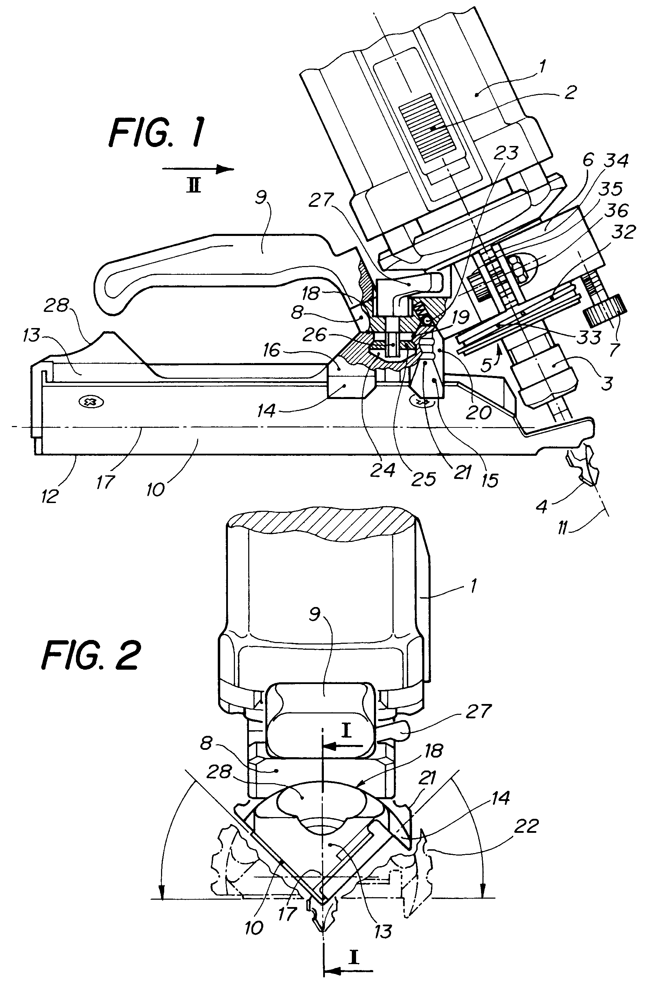

Dans une première position, identique à celle représentée aux figures 1 et 2, l'axe 11 de la broche est dans le plan bissecteur du guide 10 et permet de fraiser une rainure telle que la rainure 30 représentée à la figure 4. La rainure 30 est formée dans l'angle du profil de l'encadrement 29.

Dans la seconde position l'axe 11' de la broche est perpendiculaire à l'une des faces du guide 10 mais passe à une certaine distance de l'arête 12 du guide. Cette position permet de fraiser une rainure, telle que la rainure 31, dans l'une des faces du dièdre formé par l'encadrement 29, à une certaine distance du sommet de l'angle du profil. Il est ainsi possible de fixer dans cette rainure une garniture qui pourra se déformer, par écrasement, de part et d'autre de la rainure.

De nombreuses variantes d'exécution de la fixation du guide à la bague 6 sont possibles sans sortir du cadre de l'invention. Le guide pourrait par exemple présenter une seule partie saillante radiale limitée, dans le sens de l'axe 17, par deux faces coniques en appui sur deux faces coniques correspondantes de la bague 6. Selon un autre exemple de variante, la partie saillante du guide pourrait présenter une large rainure aux parois latérales coniques venant s'appuyer sur deux faces coniques de la bague.

## Revendications

1. Machine pour le fraisage, dans les cadres de portes et de fenêtres, de rainures destinées à recevoir des garnitures d'étanchéité, comprenant un corps (1) contenant un moteur entraînant une broche (3) destinée à recevoir une fraise profilée (4), une bague (6) dans laquelle est engagée par vissage l'extrémité (5) dudit corps proche de la broche, un guide profilé (10) en forme d'équerre fixé à ladite bague, ce guide étant orientable relativement audit corps autour d'un axe (17) parallèle aux faces du guide et coplanaire à l'axe (11) de la broche et formant un angle aigu avec cet axe, des moyens (27) étant prévu pour fixer angulairement le guide dans la position angulaire désirée, et une poignée (9) s'étendant au-dessus du guide pour le maintien de la machine contre le cadre à fraiser, caractérisée par le fait que la poignée (9) est fixée rigidement à la bague (6), que le guide (10) présente au moins deux faces (16, 19) en permanence en appui contre au moins deux faces homologues de la bague, faces distantes l'une de l'autre et contre lesquelles le guide est maintenu appliqué par un élément de pression (25), et par le fait que la bague (6) dans laquelle est vissée l'extrémité (5) du corps est fendue (34) et munie de moyens de serrage de la fente (34) de manière à pouvoir être resserrée sur ladite extrémité (5).

2. Machine selon la revendication 1, caractérisée par le fait que le guide (10) présente deux zones saillantes (14, 15) s'étendant transversalement à l'axe (17) du guide sur environ un quart de cercle et sur lesquelles sont formées lesdites surfaces d'appui (16, 19, 20) l'une (14) des zones présentant une face cylindrique (16) prenant appui contre une face cylindrique correspondante de la bague, l'autre zones saillante (15) présentant au moins une face conique (19, 20) s'appuyant contre au moins une face conique correspondante de la bague, l'espace entre lesdites zones formant une rainure (24) de profil aux extrémités convergentes et dont les faces latérales présentent des faces coniques sur lesquelles s'appuyent les faces latérales coniques d'une pièce de serrage (25) actionnable par une manette de serrage (27) exerçant une traction sur la pièce de serrage pour le blocage des saillies du guide contre la bague.

3. Machine selon l'une des revendications 1 ou 2, caractérisée par le fait qu'elle comprend des moyens de positionnement angulaire discret (22, 23) correspondant à un certain nombre de positions angulaires déterminées.

4. Machine selon l'une des revendications 1 à 3, caractérisée par le fait que ladite extrémité (5) du corps (1) est entourée d'un fil d'acier hélicoidal (32) par lequel ladite extrémité est vissée dans la bague fendue (6).

## Claims

1. Machine for milling, in door or window frames, grooves which receive tight seals, comprising a body (1) containing a motor driving a spindle (3) intended for receiving a profiled milling cutter (4), a ring (6) in which the end of said body close to the spindle is engaged by screwing, a corner plate-shaped profiled guide (10) fixed on said ring, said guide being adjustable relatively to said body around an axis (17) parallel to the faces of the guide and coplanar to the axis (11) of the spindle and forming an acute angle with said axis, means (27) being provided for angularly fixing the guide in the desired angular position, and a handle (9) extending over the guide for maintaining the machine against the frame to be milled, characterised by the fact that the handle (9) is rigidly fixed to the ring (6), that the guide has at least two faces (16,19) permanently bearing against two homologous faces of the ring, said faces being distant apart and against which the guide is maintained applied through a pressure element (25), and in that the ring (6) in which the end of the body is screwed is split (34) and has tightening means for tightening the split (34) so that the ring can be tightened on said end (5).

2. Machine as claimed in claim 1, characterised by the fact that the guide (10) has two protruding zones (14,15) extending transversally to the axis (17) of the guide on about one quarter of a circle and on which said bearing faces (16,19,20) are formed, one of said zones (14) having a cylindrical face (16) bearing against a corresponding cylindrical face of the ring, the other protruding zone (15) having at least one conical face (19,20) bearing against at least one corresponding conical face of the ring, the space between said zones forming a groove (24) with converging ends in profile and the lateral faces of which have conical faces on which the conical faces of a tightening piece (25) bear, the tightening piece being operable by a tightening lever (27) exerting a traction on the tightening piece for blocking the protrusions of the guide against the ring.

3. Machine as claimed in one of claims 1 or 2, characterised by the fact that it comprises discrete angular positioning means (22,23) corresponding to a certain number of determined angular positions.

4. Machine as claimed in one of claims 1 to 3, characterised by the fact that said end (5) of the body (1) is encircled by a helicoidal steel wire (32) by means of which said end is screwed in the split ring (6).

## Patentansprüche

1. Nutenfräsmaschine zum Fräsen von Nuten in Tür- und Fensterrahmen zwecks Einsetzens von Dichtungen, mit einem Körper (1), der einen Motor enthält, welcher eine Spindel (3) zur Aufnahme eines Profilfräsers (4) antreibt, mit einem Ring (6), in welchen das spindelseitige Ende (5) des erwähnten Körpers eingeschraubt ist, mit einer profilierten Führung (10) in Form eines Winkels, die an dem erwähnten Ring befestigt ist, wobei diese Führung relativ zu dem erwähnten Körper um eine Achse (17) orientierbar ist, welche parallel zu den Seiten der Führung und koplanar mit der Achse (11) der Spindel ist und mit dieser Achse einen spitzen Winkel bildet, mit Mitteln (27) zum Befestigen der Führung in der gewünschten Winkelposition und mit einem Handgriff (9), der sich über der Führung erstreckt, um die Maschine gegen den zu fräsenden Rahmen zu halten, dadurch gekennzeichnet, dass der Handgriff (9) starr am Ring (6) befestigt ist, dass die Führung (10) wenigstens zwei Flächen (16, 19) aufweist, die sich ständig gegen wenigstens zwei homologe, voneinander entfernte Flächen des Ringes abstützen, wobei die Führung durch ein Spannteil (25) gegen diese Flächen in Anlage gehalten wird, und dass der Ring (6), in welchem das erwähnte Ende (5) des Körpers eingeschraubt ist, einen Schlitz (34) aufweist und mit Mitteln zum Zusammendrücken des Schlitzes (34) derart versehen ist, dass er auf dem erwähnten Ende (5) festgespannt werden kann.

2. Nutenfräsmaschine nach Anspruch 1, dadurch gekennzeichnet, dass die Führung (10) zwei vorspringende Bereiche (14, 15) aufweist, die sich quer zur Achse (17) der Führung über ungefähr einen Viertelkreis erstrecken und auf denen die erwähnten Anlageflächen (16, 19, 20) gebildet sind, wobei einer (14) dieser Bereiche eine zylindrische Fläche (16) aufweist, welche an einer entsprechenden zylindrischen Fläche des Rings anliegt, während der andere vorspringende Bereich (15) wenigstens eine konische Fläche (19, 20) hat, die sich gegen wenigstens eine entsprechende konische Fläche des Rings abstützt, dass der Raum zwischen den erwähnten Bereichen eine profilierte Nut (24) mit konvergierenden Enden bildet, deren Seitenflächen konische Flächen aufweisen, an denen die konischen Seitenflächen eines Spannteils (25) anliegen, welches durch einen Spannhebel (27) betätigbar ist, der einen Zug auf das Spannteil ausübt, um die Vorsprünge der Führung am Ring zu blockieren.

3. Nutenfräsmaschine nach einem der Ansprüche 1 oder 2, dadurch gekennzeichnet, dass sie Mittel (22, 23) zum Einstellen einer bestimmten Anzahl von diskreten Winkelstellungen aufweist.

4. Nutenfräsmaschine nach einem der Ansprüche 1 bis 3, dadurch gekennzeichnet, dass das erwähnte Ende (5) des Körpers (1) von einem schraubenförmigen (32) Stahldraht umgeben ist, mit welchem das erwähnte Ende (5) in den geschlitzten Ring (6) eingeschraubt ist.
